# EUROPEAN PATENT APPLICATION

(11) **EP 4 318 762 A1**
(43) Date of publication of application: **07.02.2024**
(21) Application number: 22938738.6
(22) Date of filing: 31.05.2022
(51) Int. Cl.: H01M 50/242, H01M 50/264

(54) **BOX ASSEMBLY, BATTERY MODULE, BATTERY, AND ELECTRICAL APPARATUS**

(71) Applicant: Contemporary Amperex Technology Co., Limited, Ningde, Fujian 352100 (CN)
(72) Inventor: DU, Hang, Ningde, Fujian 352100 (CN); ZOU, Yang, Ningde, Fujian 352100 (CN); ZHENG, Shixiong, Ningde, Fujian 352100 (CN); HU, Yaowen, Ningde, Fujian 352100 (CN); ZHANG, Zhihong, Ningde, Fujian 352100 (CN); LI, Pengfei, Ningde, Fujian 352100 (CN)
(74) Representative: Rowlands, Stuart Michael
(86) International application number: PCT/CN2022/096201
(87) International publication number: WO 2023/230827

(57) **Abstract**

This application relates to the field of battery technology, and in particular, to a box assembly (210), a battery module (200), a battery (10), and an electrical device. The box assembly (210) includes at least a partition piece (212) and two end plates (211). In the box assembly (210) disclosed herein, a stress relief piece (2122) is disposed at two ends of a main body (2121) of the partition piece (212). The main body (2121) is connected to the end plate (211) by use of the stress relief piece (2122). A corner (g) is formed between the stress relief piece (2122) and the main body (2121). In this way, when the battery module (200) is subjected to stress, at least a part of the stress can be relieved through the corner (g) formed between the stress relief piece (2122) and the main body (2121), thereby reducing stress concentration at the stress relief piece (2122) and a corresponding position on the end plate (211), and in turn, improving reliability of connection between the partition piece (212) and the end plate (211), and effectively improving structural reliability of the battery module (200).

## Description

### TECHNICAL FIELD

This application relates to the field of battery technology, and in particular, to a box assembly, a battery module, a battery, and an electrical device.

### BACKGROUND

During the use of a battery, a battery module is subjected to stress such as a cell expansion force and an external force. An excessive stress impairs structural reliability of the battery module.

### SUMMARY

In view of the above problems, this application provides a box assembly, a battery module, a battery, and an electrical device to alleviate the structural reliability problem of the battery module caused by stress encountered by the battery in use.

According to a first aspect, this application provides a box assembly. The box assembly is configured to fix a plurality of battery cells. The box assembly includes: two end plates, arranged apart along a preset direction and opposite to each other; and a partition piece. The partition piece includes a main body and a stress relief piece. The main body is disposed between the two end plates along the preset direction. The stress relief piece is disposed at two ends of the main body in the preset direction and forms a corner between the stress relief piece and the main body. Each stress relief piece is fixedly connected to a corresponding end plate.

In the technical solution in an embodiment of this application, a stress relief piece is disposed at the two ends of the main body of the partition piece, the main body is connected to the end plate by use of the stress relief piece, and the corner is formed between the stress relief piece and the main body. In this way, when the battery module is subjected to stress, at least a part of the stress can be relieved through the corner formed between the stress relief piece and the main body, thereby reducing stress concentration at the stress relief piece and a corresponding position on the end plate, and in turn, improving reliability of connection between the partition piece and the end plate, and effectively improving structural reliability of the battery module.

In some embodiments, the stress relief piece is configured to be formed in one piece by bending a corresponding end of the main body. With the stress relief piece being formed in one piece by bending a corresponding end of the main body, it is convenient to form a corner between the stress relief piece and the main body.

In some embodiments, a bending angle of the stress relief piece is α, satisfying: 87° ≤ α ≤ 93°. With the bending angle falling within the above range, not only the desired corner can be formed, but also the stress relief piece can be fixedly connected to the corresponding end plate conveniently.

In some embodiments, an opening is created on each end plate. The stress relief piece located at each of two opposite ends of the main body protrudes out of the corresponding end plate through the opening. Such arrangement causes the stress relief piece to be formed outside the end plate, thereby making it more convenient to connect the stress relief piece and the corresponding end plate together.

In some embodiments, grooves recessed toward each other are created on a side of one of the two end plates and a side of the other of the two end plates respectively, the two sides being oriented away from each other. The opening is created on bottom walls of the grooves. In this way, because the opening is created on the bottom wall of the groove, the stress relief piece can be accommodated in the groove after protruding out of the corresponding end plate through the opening, thereby further protecting the connection structure between the stress relief piece and the corresponding end plate.

In some embodiments, the stress relief piece is fixedly connected to the corresponding end plate by welding. The welding process can fixedly connect the stress relief piece and the corresponding end plate together.

In some embodiments, the welding process includes at least one of laser filler wire welding or cold metal transfer welding. In the box assembly in such embodiments of this application, the welding process for fixedly connecting the stress relief piece and the corresponding end plate together is flexible, and any welding process is appropriate as long as the welding makes it convenient to fixedly connect the stress relief piece and the corresponding end plate together.

In some embodiments, the stress relief piece is fixedly connected to the corresponding end plate by riveting. The riveting process can fixedly connect the stress relief piece and the corresponding end plate together.

In some embodiments, the box assembly further includes two side plates. The two side plates are arranged apart along a direction perpendicular to the preset direction and are opposite to each other. Two ends of each of the side plates along the direction perpendicular to the preset direction are fixedly connected to corresponding end plates respectively. In this way, by disposing the two side plates, the box assembly closes in to form a mounting cavity configured to fix a plurality of battery cells.

In some embodiments, the side plate is fixedly connected to the corresponding end plates by welding or riveting. In the box assembly in such embodiments of this application, the fastening manner for fixedly connecting the side plate and the corresponding end plates together is flexible, and any fastening manner is appropriate as long as the manner makes it convenient to fasten the side plate and the corresponding end plates together.

According to a second aspect, this application provides a battery module. The battery module includes a plurality of battery cells and the box assembly according to the foregoing embodiment. A mounting cavity is formed in the box assembly, and the mounting cavity is configured to fix the plurality of battery cells. In this way, due to the use of the box assembly disclosed in the foregoing embodiment, when the battery module is subjected to stress, at least a part of the stress can be relieved through the corner formed between the stress relief piece and the main body, thereby reducing stress concentration at the stress relief piece and a corresponding position on the end plate, and in turn, reliability of connection between the partition piece and the end plate is improved, and effectively improving structural reliability of the battery module.

In some embodiments, the plurality of battery cells are arranged in parallel. At least one partition piece is disposed between two adjacent rows of battery cells of at least one pair of adjacent rows of battery cells. In the box assembly in such embodiments of this application, the arrangement of the partition piece between the battery cells is flexible, and any arrangement is appropriate as long as a partition piece is disposed between two adjacent rows of battery cells of at least one pair of adjacent rows of battery cells.

According to a third aspect, this application provides a battery. The battery includes the battery module according to the foregoing embodiment. In this way, due to the use of the battery module disclosed in the foregoing embodiment, the reliability of the battery module is high, and therefore, the reliability of the battery is improved.

According to a fourth aspect, this application provides an electrical device. The electrical device includes the battery disclosed in the foregoing embodiment. The battery is configured to provide electrical energy. In this way, due to the use of the battery disclosed in the foregoing embodiment, the reliability of the battery is high, and therefore, the reliability of the electrical device is improved.

In an embodiment of this application, the structure of the box assembly is improved in view of the stress such as cell expansion force and external force to be encountered by the battery in use. A stress relief piece is disposed at two ends of the main body of the partition piece, and a corner is formed between the stress relief piece and the main body. The stress relief piece is connected to the corresponding end plate. In this way, when the battery module is subjected to the stress, at least a part of the stress can be relieved through the corner formed between the stress relief piece and the main body, thereby reducing stress concentration at the stress relief piece and a corresponding position on the end plate, and in turn, improving reliability of connection between the partition piece and the end plate, and effectively improving structural reliability of the battery module.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not intended to limit this application. In all the drawings, the same reference numeral represents the same component. In the drawings:
FIG. 1 is a schematic structural diagram of a vehicle according to some embodiments of this application;
FIG. 2 is a schematic exploded view of a battery according to some embodiments of this application;
FIG. 3 is a schematic structural diagram of a battery module viewed from a first viewing angle according to some embodiments of this application;
FIG. 4 is a schematic exploded view of a battery module according to some embodiments of this application;
FIG. 5 is a schematic structural diagram of a battery module viewed from a second viewing angle according to some embodiments of this application;
FIG. 6 is a schematic structural diagram of a partition piece according to some embodiments of this application;
FIG. 7 is a schematic structural diagram of a battery module viewed from a third viewing angle according to some embodiments of this application;
FIG. 8 is a schematic exploded view of a battery module viewed from a third viewing angle according to some embodiments of this application;
FIG. 9 is a close-up view of a part A shown in FIG. 8 according to some embodiments of this application;
FIG. 10 is a close-up view of a part A shown in FIG. 8 according to some other embodiments of this application;
FIG. 11 is a close-up view of connection between a bending portion and an end cap according to some embodiments of this application;
FIG. 12 is a close-up view of connection between a bending portion and an end cap according to some other embodiments of this application; and
FIG. 13 is a close-up view of a part B shown in FIG. 8 according to some embodiments of this application.

List of reference numerals:
vehicle 1;
battery 10, controller 20, motor 30;
box 100, first part 110, second part 120;
battery module 200;
box assembly 210, end plate 211, opening 2111, groove 2112, bottom wall 21121, weight reduction groove 2113, protruding portion 2114, partition piece 212, main body 2121, stress relief piece 2122, corner g, bending angle α, weld h, side plate 213;
battery cell 220;
first direction F 1, second direction F2, third direction F3;
first dimension d1, second dimension d2, third dimension d3, fourth dimension d4.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, as can be seen from market trends, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. Market demand for power batteries keeps soaring with the increase of the application fields of the power batteries.

The applicant hereof has noticed that a battery module in the related art typically includes a plurality of battery cells. On the one hand, the battery cells are prone to expand after being charged repeatedly. With the expansion of the battery cells, a box assembly in which a plurality of battery cells are fixed is prone to fail under an expansion force. On the other hand, during the use of a battery module, the battery module is prone to receive stress such as an external force, thereby also impairing structural reliability of the box assembly. Therefore, under the stress such as cell expansion force and external force, the box assembly is prone to fail, thereby impairing the structural reliability of the battery module.

To relieve the stress encountered during use of the battery, the applicant hereof finds through research that the stress encountered by the battery module in use is transmitted to a junction in the box assembly or directly exerted on the junction in the box assembly. For example, under an expansion force, the stress is transmitted to the junction in the box assembly. For another example, under an external force, the stress may be directly exerted on the junction in the box assembly.

In view of the above considerations, in order to solve the reliability problem of the battery module structure caused by the stress encountered during the use of the battery, the applicant hereof has designed a box assembly after in-depth research. The box assembly includes at least one partition piece. The stress relief piece is disposed at the two ends of the main body of the partition piece, the main body is connected to the end plate by use of the stress relief piece, and the corner is formed between the stress relief piece and the main body. At least a part of the stress can be relieved by the corner before the stress reaches the junction between the partition piece and the end plate or when the stress is exerted on the junction.

In such a box assembly, due to the corner formed between the stress relief piece and the main body, the stress concentration can be reduced at the stress relief piece and a corresponding position on the end plate, thereby improving reliability of connection between the partition piece and the end plate, and effectively improving structural reliability of the battery module.

The box structure disclosed in an embodiment of this application is configured to fix, but not limited to use for fixing, a plurality of battery cells that are in the shape of a cylinder, a flat body, a cuboid, or another shape.

In this application, the battery cells may include types such as a lithium-ion battery, a lithium-sulfur battery, a sodium-ion battery, or a magnesium-ion battery. The type of the battery cell is not limited herein. The battery cell may be in various shapes such as a cylinder, flat body, or cuboid, without being limited in embodiments of this application. In terms of the packaging form, the battery cell is typically classed into three types: cylindrical battery cell, prismatic battery cell, and pouch-type battery cell. The type of the battery cell is not limited herein.

The 'battery', as mentioned in embodiments of this application, means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

The battery cell disclosed in embodiments of this application is applicable to, but not limited to use in, electrical devices such as a vehicle, watercraft, or aircraft. A power supply system of the electrical device may be formed by using the battery cell and battery disclosed in this application and the like, so as to relieve the stress encountered during use of the battery, and improve the reliability of the battery module structure.

An embodiment of this application provides an electrical device powered by a battery. The electrical device may be, but without being limited to, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1 is used as an example of the electrical device according to an embodiment of this application.

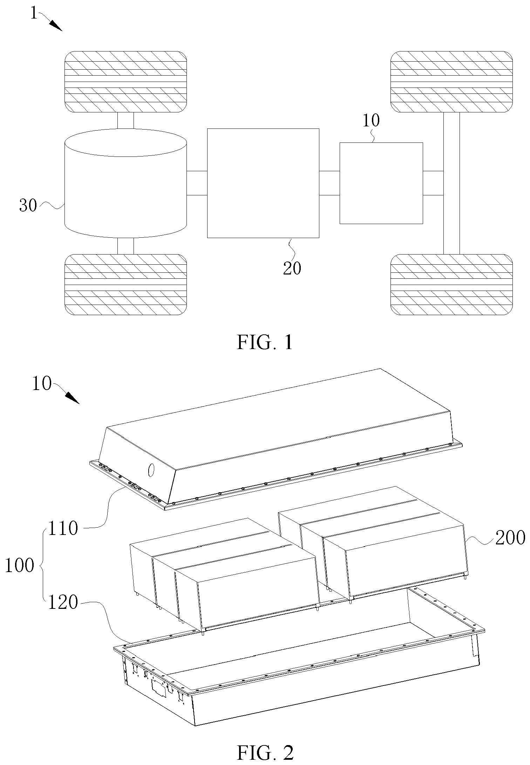

Referring to FIG. 1, FIG. 1 is a schematic structural diagram of a vehicle 1 according to some embodiments of this application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A battery 10 is disposed inside the vehicle 1. The battery 10 may be disposed at the bottom, front, or rear of the vehicle 1. The battery 10 may be configured to supply power to the vehicle 1. For example, the battery 10 may serve as an operating power supply of the vehicle 1. The vehicle 1 may further include a controller 20 and a motor 30. The controller 20 is configured to control the battery 10 to supply power to the motor 30, for example, to meet electrical energy requirements in starting, navigating, or running the vehicle 1.

In some embodiments of this application, the battery 10 serves not only as an operating power supply of the vehicle 1, but may also serve as a drive power supply of the vehicle 1 to provide a driving power supply for the vehicle 1 in place of or partly in place of fuel oil or natural gas.

Referring to FIG. 2, FIG. 2 is a schematic exploded view of a battery 10 according to some embodiments of this application. The battery 10 includes a box 100 and a battery module 200. The battery module 200 is accommodated in the box 100. The box 100 is configured to provide an accommodation space for the battery module 200. The box 100 may assume various structures. In some embodiments, the box 100 may include a first part 110 and a second part 120. The first part 110 and the second part 120 fit and cover each other. The first part 110 and the second part 120 together define an accommodation space configured to accommodate the battery module 200. The second part 120 may be a hollow structure opened at one end. The first part 110 may be a plate-like structure. The first part 110 fits on an opening side of the second part 120 so that the first part 110 and the second part 120 together define the accommodation space. Alternatively, both the first part 110 and the second part 120 may be hollow structures opened at one side. The opening side of the first part 110 fits the opening side of the second part 120. Definitely, the box 100 formed by the first part 110 and the second part 120 may be in various shapes, such as a cylinder or a cuboid.

In the battery 10, the battery module 200 includes a box assembly 210 and a plurality of battery cells 220. The box assembly 210 is configured to fix the plurality of battery cells 220. The plurality of battery cells 220 may be connected in series, parallel, or series-and-parallel pattern. The series-and-parallel pattern means a combination of series connection and parallel connection of the plurality of battery cells 220. The plurality of battery cells 220 may be directly connected in series, parallel, or series-and-parallel pattern, and then the whole of the plurality of battery cells 220 is fixed by the box assembly 210. Alternatively, in the battery 10, a plurality of battery cells 220 are connected in series, parallel, or series-and-parallel pattern to form a battery module first, and then a plurality of battery modules 200 are connected in series, parallel, or series-and-parallel pattern to form a whole for being accommodated in the box 100. The battery 10 may further include other structures. For example, the battery 10 may further include a busbar component. The busbar component is configured to implement electrical connection between the plurality of battery cells 220.

Each battery cell 220 may be, but is not limited to, a secondary battery or primary battery; or, a lithium-sulfur battery, a sodium-ion battery, or a magnesium-ion battery. The battery cell 220 may be in the shape of a cylinder, flat body, cuboid, or the like. The battery cell 220 is a minimum unit for making up a battery 10. The battery cell 220 may further include a housing, an electrode assembly, a top cover, and other functional components.

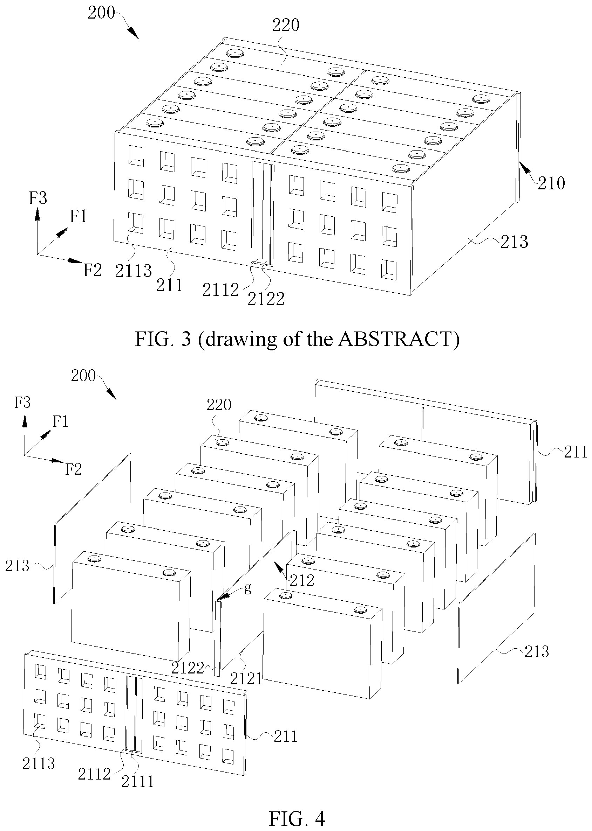

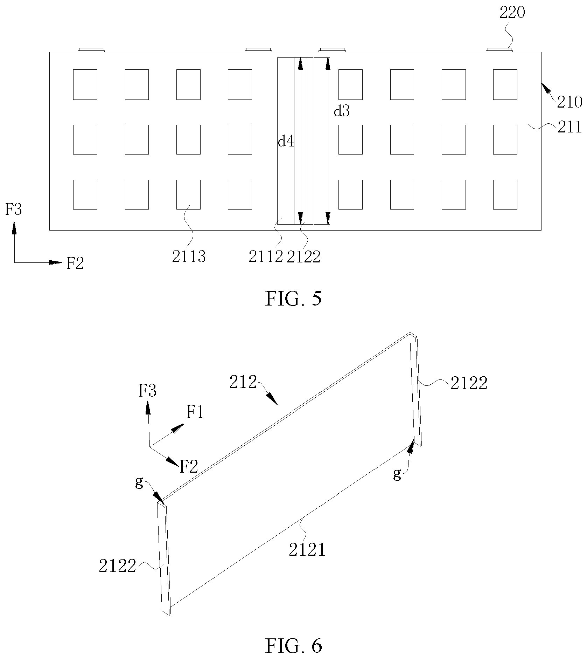

According to some embodiments of this application, referring to FIG. 3 in conjunction with FIG. 4 to FIG. 6, FIG. 3 is a schematic structural diagram of a battery module 200 viewed from a first viewing angle according to some embodiments of this application; FIG. 4 is a schematic exploded view of a battery module 200 according to some embodiments of this application; FIG. 5 is a schematic structural diagram of a battery module 200 viewed from a second viewing angle according to some embodiments of this application; and FIG. 6 is a schematic structural diagram of a partition piece 212 according to some embodiments of this application. FIG. 3 and FIG. 4 illustrate a scenario in which the battery cell 220 is rectangular. This application provides a box assembly 210. The box assembly 210 is configured to fix a plurality of battery cells 220. The box assembly 210 includes two end plates 211 and a partition piece 212. The two end plates 211 are arranged apart along a preset direction and opposite to each other. The partition piece 212 includes a main body 2121 and a stress relief piece 2122. The main body 2121 is disposed between the two end plates 211 along the preset direction. The stress relief piece 2122 is disposed at two ends of the main body 2121 in the preset direction and forms a corner g between the stress relief piece and the main body 2121. Each stress relief piece 2122 is fixedly connected to a corresponding end plate 211.

As shown in the drawing, the first direction F 1 in the drawing is a width direction of the battery module 200, the second direction F2 is a length direction of the battery module 200, and the third direction F3 is a height direction of the battery module 200.

It is hereby noted that the "preset direction" is the first direction F1 shown in the drawing. The main body 2121 of the partition piece 212 is disposed between the two end plates 211 along the preset direction. After a plurality of battery cells 220 are placed between the two end plates 211, the partition piece 212 may be sandwiched between adjacent battery cells 220. The number of partition pieces 212 is at least one. One partition piece 212 or a plurality of partition pieces 212 may be disposed between adjacent battery cells 220. For example, in a scenario shown in FIG. 3 and FIG. 4, a plurality of battery cells 220 are arranged in parallel along the second direction F2 and two rows of battery cells 220 are disposed. Each row of battery cells 220 includes a plurality of battery cells 220 arranged along the first direction F1. One partition piece 212 is disposed between the two rows of battery cells 220. The position and quantity of the partition pieces 212 may be set depending on the arrangement of the plurality of battery cells 220. Any position and quantity are appropriate as long as the main body 2121 of the partition piece 212 is disposed between the two end plates 211. The position and quantity of the partition pieces are not limited herein.

"Stress relief piece 2122" is a component that releases energy to reduce the stress exerted on the box assembly 210 equipped with the stress relief piece 2122. In the technical solution in an embodiment of this application, because the stress relief pieces 2122 are disposed at the two ends of the main body 2121 of the partition piece 212 in the preset direction respectively, a corner g is formed between each of the two stress relief pieces 2122 and the main body 2121 of the partition piece 212. The formed corner g weakens the local rigidity of the partition piece 212. When the main body 2121 of the partition piece 212 encounters an expansion force along a preset direction, at least a part of an acting force of the expansion force is relieved at the corner g before the acting force exerted by the expansion force on the main body 2121 of the partition piece 212 is transmitted to the junction between the stress relief piece 2122 and the end cap. When the box assembly 210 is impacted by to an external impact force, the stress on the junction between the stress relief piece 2122 and the end cap is directly transmitted to the corner g. At least a part of the received stress is relieved at the corner g.

The stress relief piece 2122 is disposed at the two ends of the main body 2121 of the partition piece 212, the main body 2121 is connected to the end plate 211 by use of the stress relief piece 2122, and the corner g is formed between the stress relief piece 2122 and the main body 2121. In this way, when the battery module 200 is subjected to stress, whether before or during action of the stress, at least a part of the stress can be relieved through the corner g formed between the stress relief piece 2122 and the main body 2121, thereby reducing stress concentration at the stress relief piece 2122 and a corresponding position on the end plate 211, and in turn, improving reliability of connection between the partition piece 212 and the end plate 211. In this way, the structural reliability of the battery module 200 is effectively improved.

According to some embodiments of this application, optionally, still referring to FIG. 6, the stress relief piece 2122 is configured to be formed in one piece by bending a corresponding end of the main body 2121. It is to be noted that the bending directions of the two ends of the main body 2121 of the partition piece 212 may be the same or different. For example, as shown in FIG. 6, the two ends of the main body 2121 of the partition piece 212 are bent in the same direction, that is, both bent toward the second direction F2. Selection may be made depending on practical applications, without being particularly limited herein.

With the stress relief piece 2122 being formed in one piece by bending a corresponding end of the main body 2121, it is convenient to form a corner g between the stress relief piece 2122 and the main body 2121. In this way, the partition piece 212 formed in one piece is not only simple to manufacture, but also ensures a specified level of structural strength.

Definitely, according to some other embodiments of this application, optionally, the stress relief piece 2122 and the main body 2121 may be discrete structures. In other words, the stress relief piece 2122 may be fixedly connected to the corresponding end of the main body 2121 of the partition piece 212 by a fastening means such as welding. Selection may be made depending on practical applications, without being particularly limited herein.

According to some embodiments of this application, optionally, a bending angle α of the stress relief piece 2122 is α. The bending angle satisfies: 87° ≤ α ≤ 93°. When the bending angle α is 90°, the stress relief piece 2122 can form a good fit with the corresponding end plate 211, thereby improving the connection strength between the stress relief piece and the end plate. A bending error may occur at the time of bending to form the stress relief piece 2122. Therefore, the bending angle α may be set to a value falling within a range of 87° to 93°. With the bending angle α falling within the above range, not only the desired corner g can be formed, but also the stress relief piece 2122 can be fixedly connected to the corresponding end plate 211 conveniently. For example, FIG. 6 shows a circumstance in which the bending angle α of the stress relief piece 2122 is 90°. The specific bending angle α may depend on the actual manufacturing process and usage requirements, and is not particularly limited herein.

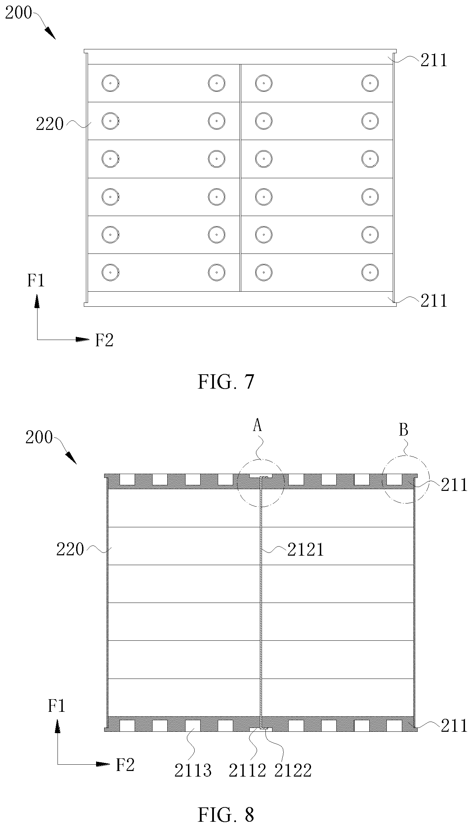

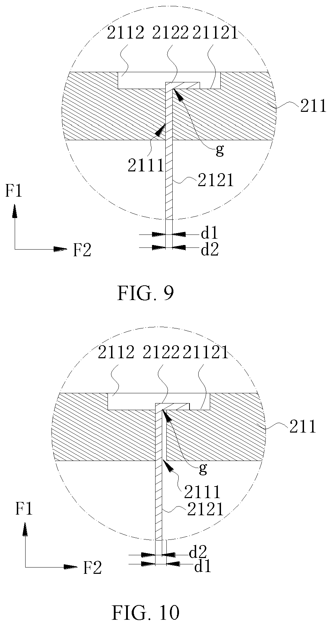

According to some embodiments of this application, optionally, referring to FIG. 7 in conjunction with FIG. 8 to FIG. 9, FIG. 7 is a schematic structural diagram of a battery module 200 viewed from a third viewing angle according to some embodiments of this application; FIG. 8 is a schematic exploded view of a battery module 200 viewed from a third viewing angle according to some embodiments of this application; and FIG. 9 is a close-up view of a part A shown in FIG. 8 according to some embodiments of this application. An opening 2111 is created on each end plate 211. The stress relief piece 2122 located at each of two opposite ends of the main body 2121 protrudes out of the corresponding end plate 211 through the opening 2111. In other words, the stress relief piece 2122 is formed outside the end plate 211. It is to be noted that "outside the end plate 211" means locations beyond the sides of the two end plates 211, the sides being oriented away from each other. Such arrangement causes the stress relief piece 2122 to be formed outside the end plate 211, thereby making it more convenient to connect the stress relief piece 2122 and the corresponding end plate 211 together.

According to some embodiments of this application, optionally, still referring to FIG. 9 in conjunction with FIG. 8, grooves 2112 recessed toward each other are created on a side of one of the two end plates 211 and a side of the other of the two end plates respectively, the two sides being oriented away from each other. The opening 2111 is created on bottom walls 21121 of the grooves 2112. Because the opening 2111 is created on the bottom wall 21121 of the groove 2112, the stress relief piece 2122 can be accommodated in the groove 2112 after protruding out of the corresponding end plate 211 through the opening 2111. When encountering stress such as an external impact force, the connection structure between the stress relief piece 2122 and the corresponding end plate 211 can be further protected.

According to some embodiments of this application, optionally, the stress relief piece 2122 is fixedly connected to the corresponding end plate 211 by welding. The welding process can fixedly connect the stress relief piece 2122 and the corresponding end plate 211 together. Specifically, in some embodiments, the welding process includes at least one of laser filler wire welding or cold metal transfer welding. In the box assembly 210 in such embodiments of this application, the welding process for fixedly connecting the stress relief piece 2122 and the corresponding end plate 211 together is flexible, and any welding process is appropriate as long as the welding makes it convenient to fixedly connect the stress relief piece 2122 and the corresponding end plate 211 together. As an implementation, after the stress relief piece 2122 protrudes out of the corresponding end plate 211 through the opening 2111 and is bent, the stress relief piece 2122 is fixed to the corresponding end plate 211 by laser filler wire welding. This not only increases the welding strength, but also avoids microcracks generated inside the weld.

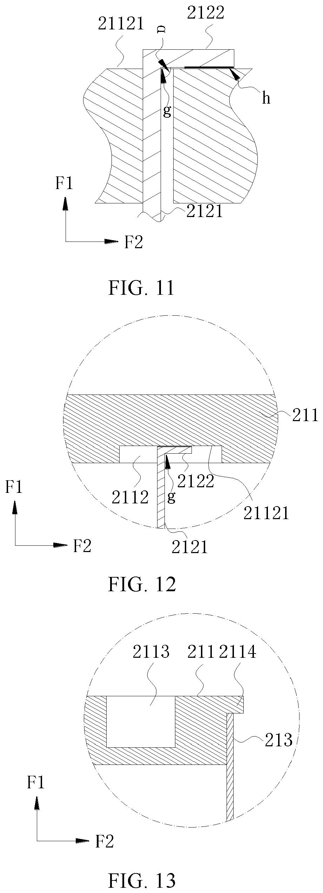

According to some embodiments of this application, optionally, referring to FIG. 10 in conjunction with FIG. 11, FIG. 10 is a close-up view of a part A shown in FIG. 8 according to some other embodiments of this application; and FIG. 11 is a close-up view of connection between a bending portion and an end cap according to some embodiments of this application.

The dimension of the opening 2111 along the second direction F2 is a first dimension d1, the dimension of the partition piece 212 along the second direction F2 is a second dimension d2, and the first dimension d1 is larger than the second dimension d2. The dimension of the opening 2111 along the third direction F3 is a third dimension d3, the dimension of the partition piece 212 along the third direction F3 is a fourth dimension d4, and the third dimension d3 is larger than the fourth dimension d4. In this way, the stress relief piece 2122 is caused to protrude out of the corresponding end plate 211 through the opening 2111.

Specifically, in some embodiments, when the stress relief piece 2122 and the corresponding end plate 211 are fixed together by means such as welding, the stress relief piece 2122 can be fully lap-jointed onto the bottom wall 21121 of the groove 2112 on the corresponding end plate 211, or partially lap-jointed onto the bottom wall 21121 of the groove 2112 on the corresponding end plate 211. For example, FIG. 9 shows a scenario in which the stress relief piece 2122 is fully lap-jointed onto the bottom wall 21121 of the groove 2112 on the corresponding end plate 211, and FIG. 10 and FIG. 11 show a scenario in which the stress relief piece 2122 is partially lap-jointed onto the bottom wall 21121 of the groove 2112 on the corresponding end plate 211. In this way, a lap-joint is formed, making it convenient to form a weld h by welding and fasten the stress relief piece 2122 and the corresponding end plate 211 together.

According to some embodiments of this application, optionally, the stress relief piece 2122 is fixedly connected to the corresponding end plate 211 by riveting. The riveting process can fixedly connect the stress relief piece 2122 and the corresponding end plate 211 together. In the riveting process, the stress relief piece 2122 may also be fully or partially lap-jointed. Selection may be made depending on practical applications, without being particularly limited herein.

According to some other embodiments of this application, optionally, referring to FIG. 12, FIG. 12 is a close-up view of connection between a bending portion and an end cap according to some other embodiments of this application. The stress relief piece 2122 may be formed inside the end plate 211 instead. It will be understood that, similar to the explanation of the phrase "outside the end plate 211" in some preceding embodiments, the phrase "inside the end plate 211" means a location on the sides of the two end plates 211, the sides being oriented toward each other, that is, a part between the two end plates 211. In other words, without a need to create an opening 2111 on each end plate 211, the fixation to the stress relief piece 2122 is directly performed at the part between the two end plates 211. The arrangement may be performed depending on practical applications, without being particularly limited herein.

Specifically, in some embodiments, optionally, still referring to FIG. 12, grooves 2112 recessed away from each other are created on a side of one of the two end plates 211 and a side of the other of the two end plates respectively, the two sides being oriented toward each other. The stress relief piece 2122 formed by bending abuts on the bottom wall 21121 of the groove 2112. The stress relief piece 2122 may be accommodated in the groove 2112. When encountering stress such as an external impact force, the connection structure between the stress relief piece 2122 and the corresponding end plate 211 can be further protected.

According to some embodiments of this application, optionally, still referring to FIG. 3, FIG. 5, and FIG. 8, a plurality of weight reduction grooves 2113 recessed toward each other are created on a side of one of the two end plates 211 and a side of the other of the two end plates respectively, the two sides being oriented away from each other. In this way, not only can the weight of the box assembly 210 be reduced, but also materials can be saved.

According to some embodiments of this application, optionally, referring to FIG. 13 in conjunction with FIG. 3, FIG. 4, and FIG. 8, FIG. 13 is a close-up view of a part B shown in FIG. 8 according to some embodiments of this application. The box assembly 210 further includes two side plates 213. The two side plates 213 are arranged apart along a direction perpendicular to the preset direction (that is, along the second direction F2 shown in the drawing) and are opposite to each other. Two ends of each of the side plates 213 along the direction perpendicular to the preset direction are fixedly connected to corresponding end plates 211 respectively. In this way, by disposing the two side plates 213, the box assembly 210 closes in to form a mounting cavity configured to fix a plurality of battery cells 220.

According to some embodiments of this application, optionally, the side plate 213 is fixedly connected to the corresponding end plate 211 by welding or riveting. In the box assembly 210 in such embodiments of this application, the fastening manner for fixedly connecting the side plate 213 and the corresponding end plates 211 together is flexible, and any fastening manner is appropriate as long as the manner makes it convenient to fasten the side plate 213 and the corresponding end plates 211 together. In the example shown in FIG. 13, the end plate 211 protrudes along the second direction F2 to form protruding portions 2114, and the two ends of the side plate 213 along the first direction F 1 fixedly abut on the corresponding protruding portions 2114 respectively. In this way, due to the protruding portions 2114 disposed, when encountering stress such as an external impact force, the connection structure between the side plate 213 and the corresponding end plate 211 can be further protected.

According to some embodiments of this application, this application further provides a battery module 200. The battery module includes a plurality of battery cells 220 and the box assembly 210 disclosed in any one of the foregoing technical solutions. A mounting cavity is formed in the box assembly 210, and the mounting cavity is configured to fix the plurality of battery cells 220. In this way, due to the use of the box assembly 210 disclosed in any one of the foregoing technical solutions, when the battery module 200 is subjected to stress, at least a part of the stress can be relieved through the corner g formed between the stress relief piece 2122 and the main body 2121, thereby reducing stress concentration at the stress relief piece 2122 and a corresponding position on the end plate 211, and in turn, improving reliability of connection between the partition piece 212 and the end plate 211, and effectively improving structural reliability of the battery module 200.

According to some embodiments of this application, this application further provides a battery 10. The battery includes the battery module 200 disclosed in any one of the foregoing technical solutions. In this way, due to the use of the battery module 200 disclosed in any one of the foregoing technical solutions, the reliability of the battery module 200 is high, and therefore, the reliability of the battery 10 is improved.

According to some embodiments of this application, this application further provides an electrical device. The electrical device includes the battery 10 disclosed in any one of the foregoing technical solutions, and the battery 10 is configured to provide electrical energy for the electrical device. In this way, due to the use of the battery 10 disclosed in any one of the foregoing technical solutions, the reliability of the battery 10 is high, and therefore, the reliability of the electrical device is improved.

The electrical device may be any device or system in which the battery 10 is applied.

According to some embodiments of this application, referring to FIG. 3 to FIG. 6 in conjunction with FIG. 8 and FIG. 9, this application provides a box assembly 210 disposed in a two-row battery module 200 and configured to fix the battery cells 220 arranged in two rows. The box assembly 210 includes a partition piece 212, two end plates 211, and two side plates 213. The two end plates 211 are arranged apart along a first direction F1 and opposite to each other. The two side plates 213 are arranged apart along a second direction F2 and opposite to each other. Two ends of each of the side plates 213 along the second direction F2 are fixedly connected to corresponding end plates 211 respectively. One partition piece 212 is disposed between the two rows of battery cells 220. The partition piece 212 includes a main body 2121 and a stress relief piece 2122. The main body 2121 is disposed between the two end plates 211 along the first direction F1. The stress relief piece 2122 is disposed at two ends of the main body 2121 in the first direction F1 and forms a corner g between the stress relief piece and the main body 2121. Grooves 2112 recessed toward each other are created on a side of one of the two end plates 211 and a side of the other of the two end plates respectively, the two sides being oriented away from each other. The opening 2111 is created on bottom walls 21121 of the grooves 2112. The stress relief pieces 2122 located at the two opposite ends of the main body 2121 protrude out of the corresponding end plates 211 through the opening 2111. The stress relief pieces 2122 are accommodated in the grooves 2112 after protruding out of the corresponding end plates 211 through the opening 2111. Each stress relief piece 2122 is lap-jointed to the bottom wall 21121 of the groove 2112 of the corresponding end plate 211. Each stress relief piece 2122 is fixedly connected to the corresponding end plate 211 by a laser filler wire welding process.

According to some embodiments of this application, referring to FIG. 3 to FIG. 6, an assembling process of a box assembly 210 according to this application may be as follows:
1. Assembling a partition piece 212 and two end plates 211 into position;
2. Combining a plurality of battery cells 220 in groups to form a structure that includes two rows of battery cells 220;
3. Assembling two side plates 213 to the two end plates 211 in one-to-one correspondence;
4. Bending a stress relief piece 2122 in the partition piece 212 by a bending process;
5. Fixedly welding the stress relief piece 2122 to the corresponding end plate 211 by a laser filler wire welding process; and
6. Fixedly welding the two side plates 213 to the two end plates 211 correspondingly. An alternative assembling process is to bend the stress relief piece 2122 in the partition piece 212 first by a bending process, and then assemble the two side plates 213. The assembling steps may be set depending on requirements in practical applications, without being particularly limited herein.

To sum up, in some embodiments of this application, the structure of the box assembly 210 is improved in view of the stress such as cell expansion force and external force to be encountered by the battery 10 in use. A stress relief piece 2122 is disposed at two ends of the main body 2121 of the partition piece 212, and a corner g is formed between the stress relief piece 2122 and the main body 2121. The stress relief piece 2122 is connected to the corresponding end plate 211. In this way, when the battery module 200 is subjected to stress, at least a part of the stress can be relieved through the corner g formed between the stress relief piece 2122 and the main body 2121, thereby reducing stress concentration at the stress relief piece 2122 and a corresponding position on the end plate 211, and in turn, improving reliability of connection between the partition piece 212 and the end plate 211, and effectively improving structural reliability of the battery module 200.

Finally, it is to be noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A box assembly (210), configured to fix a plurality of battery cells (220), **characterized in that** the box assembly comprises:
two end plates (211), arranged apart along a preset direction and opposite to each other; and
a partition piece (212), comprising a main body (2121) and a stress relief piece (2122), wherein the main body (2121) is disposed between the two end plates (211) along the preset direction, and the stress relief piece (2122) is disposed at two ends of the main body (2121) in the preset direction and forms a corner (g) between the stress relief piece and the main body (2121), wherein
each stress relief piece (2122) is fixedly connected to a corresponding end plate (211).

2. The box assembly (210) according to claim 1, **characterized in that**, the stress relief piece (2122) is configured to be formed in one piece by bending a corresponding end of the main body (2121).

3. The box assembly (210) according to claim 2, **characterized in that** a bending angle of the stress relief piece (2122) is α; and
the bending angle satisfies: 87° ≤ α ≤ 93°.

4. The box assembly (210) according to claim 1, **characterized in that** an opening (2111) is created on each end plate (211); and
the stress relief piece (2122) located at each of two opposite ends of the main body (2121) protrudes out of the corresponding end plate (211) through the opening (2111).

5. The box assembly (210) according to claim 4, **characterized in that** grooves (2112) recessed toward each other are created on a side of one of the two end plates (211) and a side of the other of the two end plates respectively, the two sides being oriented away from each other; and
the opening (2111) is created on bottom walls (21121) of the grooves (2112).

6. The box assembly (210) according to any one of claims 1 to 5, **characterized in that** the stress relief piece (2122) is fixedly connected to the corresponding end plate (211) by welding.

7. The box assembly (210) according to claim 6, **characterized in that** the welding comprises at least one of laser filler wire welding or cold metal transfer welding.

8. The box assembly (210) according to any one of claims 1 to 5, **characterized in that** the stress relief piece (2122) is fixedly connected to the corresponding end plate (211) by riveting.

9. The box assembly (210) according to any one of claims 1 to 5, **characterized in that** the box assembly (210) further comprises two side plates (213);
the two side plates (213) are arranged apart along a direction perpendicular to the preset direction and are opposite to each other; and
two ends of each of the side plates (213) along the direction perpendicular to the preset direction are fixedly connected to corresponding end plates (211) respectively.

10. The box assembly (210) according to claim 9, **characterized in that** the side plate (213) is fixedly connected to the corresponding end plates (211) by welding or riveting.

11. A battery module (200), **characterized in that** the battery module comprises a plurality of the battery cells (220) and the box assembly (210) according to any one of claims 1 to 10; and
a mounting cavity is formed in the box assembly (210), and the mounting cavity is configured to fix the plurality of battery cells (220).

12. The battery module (200) according to claim 11, **characterized in that** the plurality of battery cells (220) are arranged in parallel; and
at least one partition piece (212) is disposed between two adjacent rows of battery cells of at least one pair of adjacent rows of battery cells (220).

13. A battery (10), **characterized in that** the battery comprises the battery module (200) according to claim 11 or 12.

14. An electrical device, **characterized in that** the electrical device comprises the battery (10) according to claim 13, and the battery (10) is configured to provide electrical energy.
